(19) Europäisches Patentamt

European Patent Office

Office européen des brevets

(11) Veröffentlichungsnummer: **0 096 884**
**B1**

(12) **EUROPÄISCHE PATENTSCHRIFT**

(45) Veröffentlichungstag der Patentschrift: 09.11.88

(21) Anmeldenummer: 83105790.6

(22) Anmeldetag: 13.06.83

(51) Int. Cl.⁴: **G 01 S 7/28**

(54) **Puls-Doppler-Radargerät mit einem Pulslängen-Diskriminator.**

(30) Priorität: 15.06.82 DE 3222474

(43) Veröffentlichungstag der Anmeldung:
28.12.83 Patentblatt 83/52

(45) Bekanntmachung des Hinweises auf die
Patenterteilung:
09.11.88 Patentblatt 88/45

(84) Benannte Vertragsstaaten:
FR GB IT NL

(56) Entgegenhaltungen:
EP-A-0 073 706
DE-A-2 500 877
DE-A-2 537 137
DE-A-2 823 419
FR-A-1 191 320
US-A-3 713 153
US-A-4 068 233

THE MARCONI REVIEW, Band XXXVI, Nr. 191,
4. Quartal 1973, Seiten 237-248, Great Baddow,
GB., J.G. ELLIS: "Digital MTi, a new tool for the
radar user"

(73) Patentinhaber: **Siemens Aktiengesellschaft**
**Berlin und München**
**Wittelsbacherplatz 2**
**D-8000 München 2 (DE)**

(72) Erfinder: **Gstöttner, German, Dipl.-Ing.**
**Kaltenbrunner Strasse 11**
**D-8000 München 71 (DE)**
Erfinder: **Kautzsch, Georg, Dipl.-Ing.**
**Herzog-Welf-Strasse 7**
**D-8011 Zorneding (DE)**

EP 0 096 884 B1

Courier Press, Leamington Spa, England.

**Beschreibung**

Die Erfindung bezieht sich auf ein Puls-Doppler-Radargerät mit den im Oberbegriff des Anspruchs 1 genannten Merkmalen.

Bei der Auswertung von Radar-Echosignalen ist es erforderlich, die Anzahl der Falschmeldungen unabhängig von der Art der Beeinflussung des Empfängers auf einen vorgegebenen Wert konstant zu halten. Zur Unterdrückung von externen Störsignalen, die durch Dauerstörsender verursacht werden, ist es bekannt, sogenannte CFAR-Schaltungen zu verwenden. Es ist auch bekannt, synchrone Pulsstörer (intermittierende Linienstörer bzw. Rauschstörer), die mehrere Entfernungskanäle belegen, unter Anwendung eines Puls-Längen-Diskriminators zu unterdrücken (DE—A—28 23 419). Mit dieser Schaltungsanordnung kann durch Differenzbildung der Signalamplituden aufeinanderfolgender Entfernungskanäle je ein Kriterium für den Anfang oder als Ende eines Flugobjekts oder Störsignales gebildet werden. Bei Überschreiten einer für Flugobjekte als maximal vorgegebenen Impulslänge wird das Empfangssignal als Störsignal interpretiert und kann unterdrückt werden. Durch Störsignale überdeckte Flugobjektsignale, deren Amplitude größer als die des Störsignales ist, werden erkannt. Voraussetzung für die angestrebte Funktion des Pulslängen-Diskriminators ist, daß die Amplituden von Stör- und überlagerten Flugobjektsignalen bei der Signalauswertung vor dem Pulslängen-Diskriminator unverändert erhalten bleiben.

Kurze Einzelimpulse, die verschiedene Ursachen haben können, z.B. Bewegtzeichenechos aus Überreichweiten bei Verwendung einer sich von Sendepuls zu Sendepuls ändernden Pulswiederholzeit, werden vom Pulslängen-Diskriminator nicht unterdrückt.

Aus der DE—A 25 00 877 ist auch bereits eine Anordnung zur Unterdrückung störender Impulse beim Impuls-Doppler-Radar bekannt. Mit dieser Anordnung soll die unzureichende Unterdrückung von kurzen Störimpulsen verbessert werden. Dazu wird der Störimpuls durch ein vorhergehendes Signal ersetzt. Mittels eines Umschalters wird der Signalverarbeitungszweig zwischen einem digitalen Filter und der weiteren Signalverarbeitung unterbrochen und über einen zweiten Kontakt des Schalters, der in einer Rückkopplungsschleife liegt, das vorhergehende Signal zur Weiterverarbeitung eingespeist. Der Umschalter wird von einer Einrichtung gesteuert, die den zeitlichen, charakteristischen Unterschied zwischen einem störenden Impuls und den Amplitudenschwankungen eines Zielechos ausnutzt. Diese Schaltungsanordnung verhindert, daß der störende Impuls der weiteren Signalverarbeitung unter anderem der Filterung in den Dopplerfiltern zugeführt wird.

Der Erfindung liegt die Aufgabe zugrunde, die Störunterdrückung bei der Signalverarbeitung mit Pulslängendiskriminator auf störende Einzelimpulse auszudehnen. Gemäß der Erfindung wird diese Aufgabe durch die im Anspruch 1 genannten Merkmale gelöst.

Alle während jeder Abtastperiode mittels der Einzelpulserkennung erfaßten Inpulse führen zu einer kurzzeitigen Unterbrechung der Signalübertragung und werden auf diese Weise ausgetastet. Die Einzelpulseerkennung erfolgt in einer Schaltung durch Bildung der Differenz der Signalamplituden am Ausgang des Gleichrichters und am Ausgang der Nachintergrationsschaltung und durch Vergleich der Differenz mit einem vorgegebenen signalabhängigen Wert. Dieser Vergleichswert ist ein aus allen dem Radarempfänger angebotenen Signale, z.B. Zielechosignalen, Störimpulsen, Zielechos mit überlagerten Störimpulsen gebildeter normierter Zielamplitudenverlauf, dessen Energie und Amplitudenverlauf etwa dem kleinsten entdeckbaren Ziel entspricht.

Die Erfindung une weitere Einzelheiten der Erfindung werden in den Figuren 1 bis 4 näher erläutert.

Es zeigen

Fig. 1 das bekannte Schaltungsprinzip des Radarempfängers mit einem Pulslängendiskriminator,

Fig. 2 das Blockschaltbild eines Teiles des Signalauswertungszweiges mit einer Anordnung zur Einzelpulserkennung und einer Steuerlogik,

Fig. 3 ein Ausführungsbeispiel einer Schaltung zur Einzelpulserkennung,

Fig. 4 die Schaltung der Steuerlogik.

Ein Puls-Doppler-Radargerät bekannter Art mit einer Antenne 1 ist eingangsseitig mit einem Sende-Empfangsschalter 3 und einem Sendeoszillator 4 ausgerüstet. Die Umschaltung des Sende-Empfangs-Schalters 2 erfolgt durch einen Taktgenerator 2. Das Eingangssignal gelangt zu einer Mischstufe 5, deren Überlagerungsoszillator mit 6 bezeichnet ist. Die demodulierten Empfangssignale werden einem Bewegtzeichenfilter 7 (MTI-Filter) zugeführt, das eine größere Anzahl von Entfernungskanälen aufweist. Das Bewegtzeichenfilter unterdrückt Echosignale, die von Festzeichen kommen, während Bewegtzeichen-Echosignale praktisch ungedämpft übertragen werden. Es kann zweckmäßig sein, die Signalbearbeitung in digitaler Form vorzunehmen, d.h. nach der Mischstufe 5 einen hier gestrichelt angedeuteten Analog-Digital-Wandler einzuschalten. Dazu werden einzelne Abtastproben aus dem erhaltenen Signal entnommen, die in digitaler Form weiterverarbeitet werden. Nach Gleichrichtung in einer Anordnung 8 gelangen die so erhaltenen Videosignale an eine Nachintegrationsschaltung 9 und über einen Puls-Längen-Diskriminator 10 mit der Funktion einer Störunterdrückungsschaltung zur Darstellung einer Anzeigeeinrichtung PPI (11) oder sie werden in einer Auswerteeinrichtung weiterverarbeitet. Um auch die Unterdrückung von kurzen störenden Einzelimpulsen zu ermöglichen, muß der Puls-Längen-Diskriminator mit weiteren Schaltungen zusammenarbeiten.

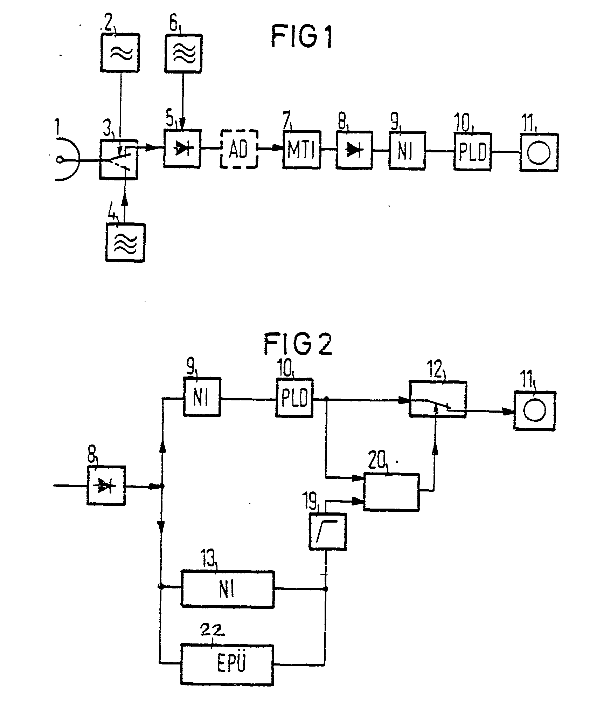

In Fig. 2 ist eine um eine Schaltung zur Einzelpulsunterdrükkung erweiterter Signalverarbeitungsweg dargestellt. Die wesentlichen Schaltungsteile sind ein steuerbarer Schalter 12, der zwischen dem Puls-Längen-Diskriminator 10 und der Anzeigeeinrichtung 11 so eingefügt ist, daß dieser den Übertragungsweg zur Anzeigeeinrichtung 11 unterbrechen kann und ein am Eingang der Nachintegrationsschaltung 9 vom Signalverarbeitungsweg abgezweigter Schaltungszweig, der eine weitere nichtkohärente Integrationsschaltung 13 und eine Schaltung 22 zur Einzelpulserkennung enthält. Diese Schaltungsteile liefern zusammen mit einer Videoschwelle 19 und einer Steuerlogik 20, die am Ausgang der Integrationsschaltung 13 liegen, das Kriterium (H- oder L-Signal) für die Betätigung des Schalters 12 bei Vorliegen eines störenden Einzelpulses. Ein im Pulslängen-Diskriminator 10 nicht unterdrückter Einzelpuls kann nicht an die Anzeigeeinrichtung 11 gelangen, da die Einzelpulserkennung 22 vorher den steuerbaren Schalter 12 geöffnet hat.

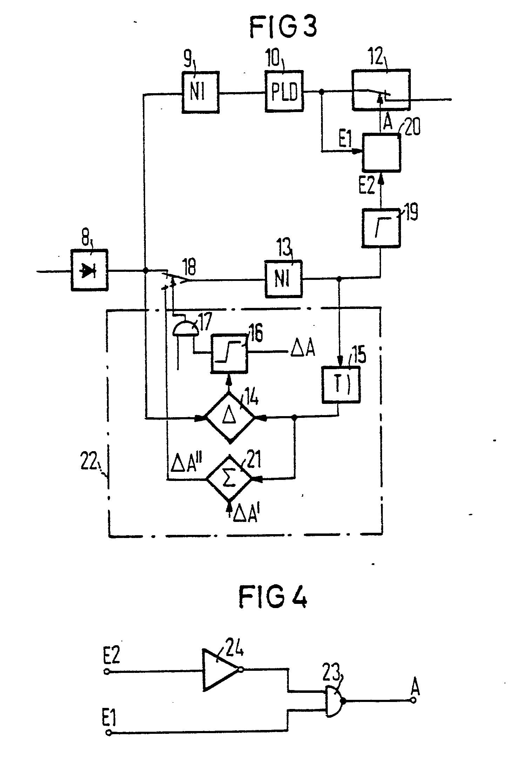

Ein Ausführungsbeispiel für eine Schaltung zur Einzelpulserkennung wird anhand der Fig. 3 beschrieben. Damit Einzelpulsstörungen nicht die Schwelle 19 überschreiten, müssen diese vor der Nachintegration begrenzt oder ausgetastet werden ohne daß Nutzsignalen Energie entzogen wird. Mit der vorliegenden Schaltung geschieht das in der Weise, daß in jedem Entfernungskanal fortwährend die Differenz zwischen der Signalamplitude am Ausgang des Gleichrichters 8 und der Signalamplitude am Ausgang der Nachintegrationsschaltung 13 gebildet wird. Für die Differenzbildung wird der Ausgang des Gleichrichters 8 unmittelbar mit dem Eingang eines Subtrahierers 14 und der Ausgang der nichtkohärenten Integrationsschaltung 13 über eine Verzögerungsleitung 15 mit einem weiteren Eingang des Subtrahierers 14 verbunden. In einem Komparator 16 wird festgestellt, wann die Differenz am Ausgang des Subtrahierers 14 größer ist als ein fest vorgegebener Wert 44. Dieser Wert wird im Prinzip aus allen dem Radarempfänger angebotenen Signalen, z.B. Zielechos, Störpulsen, Zielechos mit überlagerten Störpulsen als normierter Zielamplitudenwert gebildet, dessen Energie etwa dem kleinsten entdeckbaren Ziel entspricht. Überschreitet der Differenzwert am Ausgang des Subtrahierers den vorgegebenen Wert $\Delta A$, dann liegt ein Störimpuls vor, der den Komparator 16 veranlaßt, ein Signal abzugeben, das den Schalter 18 steuert. Der Eingang der Nachintegrationsschaltung 13 wird vom Gleichrichter 8 getrennt und gleichzeitig verbindet der Schalter 18 Eingang und Ausgang der Nachintegrationsschaltung 13, so daß eine Rückkopplungsschleife gebildet wird, die außer der Verzögerungsleitung 15 einen Addierer 21 enthält. Der Addierer 21 hat die Aufgabe, auf das rückgekoppelte Ausgangssignal der Nachintegration einen Wert $\Delta A'$, welcher beispielsweise etwa der normierten Signalamplitude entspricht, aufzuaddieren. Während der Dauer des Störimpulses bildet ein Vorgabewert $\Delta A''$ das Eingangssignal der Nachintegrationsschaltung 13, der z.B. dem kleinsten entdeckbaren Bewegtsignal entspricht. Ist die Amplitudendifferenz der Ausgangssignale von Gleichrichter 8 und Nachintegrationsschaltung 13 wieder kleiner als der vorgegebene Wert $\Delta A$, dann wird die Rückkopplungsschleife mittels des Schalters 18 aufgetrennt und der Ausgang des Gleichrichters 8 mit dem Eingang der Nachintegrationsschaltung 13 verbunden.

Der normierte Signalamplitudenwert $\Delta A$, der im Komparator 16 zur Erkennung des Störimpulses führt, muß nicht die gleiche Größe aufweisen, wie der im Addierer 21 auf das um eine Empfangsperiode verzögerte Ausgangssignal der nichtkohärenten Integrationsschaltung 13 aufaddierte Wert $\Delta A'$. Durch geeignete Kombination der beiden Werte kann mit dem Vorgabewert $\Delta A''$ eine optimale Störimpulsunterdrückung geschaffen werden.

Die Schaltung der Steuerlogik 20 ist in Fig. 4 dargestellt. Die beiden Eingänge E1 und E2 sind an den Ausgang des Pulslängen-Diskriminators 10 und der Videoschwelle 19 angeschlossen. Das Ausgangssignal des Pulslängen-Diskriminators 10 wird über den Eingang E1 direkt und das Ausgangssignal der Videoschwelle 19 über einen Inverter 24 einem NAND-Gatter 23 zugeführt. Der Ausgang A liefert das Steuersignal für den Schalter 12. Nur im Fall eines "Einzelpulses" wird das Steuersignal "L" generiert wird. In diesem Fall wird der PLD-Weg unterbrochen, die Einzelpulse gelangen somit nicht zur Anzeigeeinrichtung 11.

**Patentansprüche**

1. Puls-Doppler-Radar mit
— einer Schaltung (7) zur Festzeichenunterdrückung,
— einer Auswerteeinrichtung (11),
— einem dazwischen verlaufenden Signalkanal aus einer Schaltung (9) zur Nachintegration und einem an deren Ausgang angeschlossenen Pulslängendiskriminator (10), dadurch gekennzeichnet, daß
— zwischen dem Pulslängendiskriminator (10) und der Auswerteeinrichtung (11) ein steuerbarer Schalter (12) zur Auftrennung der Verbindung zwischen dem Diskriminator (10) und der Auswerteeinrichtung (11) vorgesehen ist,
— der Signalkanal und ein Steuerkanal jeweils eingangsseitig über einen Empfangsgleichrichter (8) mit dem Ausgang der Schaltung (7) zur Festzeichenunterdrückung verbunden sind,
— der Steuerkanal folgende Einrichtungen aufweist:
a) eine weitere Nachintegrationsschaltung (13),
b) einen Umschalter (18), über den der Eingang der weiteren Nachintegrationsschaltung (13) mit dem Empfangsgleichrichter (8) in einer ersten Stellung des Umschalters (18) verbunden ist,
c) einen Rückkopplungsweg (15, 21), über den der Ausgang der weiteren Nachintegrationsschaltung (13) in einer zweiten Stellung des Umschalters (18) mit dem Eingang der weiteren Nachintegrationsschaltung (13) zwecks Vorgabe eines Referenzwertes ($\Delta A''$) verbunden ist,
d) eine den Umschalter (18) steuernde Schaltungsanordnung (14—17) zur Einzelpulserkennung, die bei Überschreitung eines Grenzwerts (ΔA) durch die Differenz zwischen Ein- und Ausgangssignal der weiteren Nachintegrationsschaltung (13) den Umschalter (18) von der ersten in die zweite Stellung bringt, sowie

e) eine zwischen den Ausgang der weiteren Nachintegrationsschaltung (13) und den Steuereingang des Schalters (12) gelegte Serienschaltung aus einer Videoschwelle (19) und einer Steuerlogik (20), der auch das Ausgangssignal des Pulslängendiskriminators (10) zugeführt ist.

2. Puls-Doppler-Radargerät nach Anspruch 1, dadurch gekennzeichnet, daß die Steuerlogik aus einem NAND-Gatter (23) besteht, dessen Eingänge mit dem Ausgang des Pulslängen-Diskriminators (10) und über einen Inverter (2) mit dem Ausgang der Videoschwelle (19) verbunden sind.

## Revendications

1. Radar Doppler à impulsions comportant
— un circuit (7) de suppression des échos fixes,
— un dispositif d'évaluation (11),
— un canal de transmission de signaux inséré entre ce circuit et ce dispositif et constitué par un circuit (9) servant à réaliser la post-intégration, et par un discriminateur (10) des durées d'impulsions, raccordé à la sortie de ce circuit, caractérisé par le fait que
— entre le discriminateur (10) des durées d'impulsions et le dispositif d'évaluation (11) il est prévu un interrupteur commandable (12) servant à interrompre la liaison entre le discriminateur (10) et le dispositif d'évaluation (11),
— le canal de transmission de signaux et un canal de commande sont raccordés, respectivement sur le côté entrée, par l'intermédiaire d'un redresseur de réception (8), à la sortie du circuit (7) de suppression des échos fixes,
— le canal de commande comporte les dispositifs suivants:
a) un circuit supplémantaire de post-intégration (13),
b) un commutateur (18), au moyen duquel l'entrée du circuit supplémentaire de post-intégration (13) est reliée au redresseur de réception (8), lorsque le commutateur (18) est dans une première position,
c) une branche de réaction (15, 21), par l'intermédiaire de laquelle la sortie du circuit supplémentaire de post-intégration (13) est reliée à ce circuit pour la prédétermination d'une valeur de référence (ΔA''), lorsque le commutateur (18) est dans une seconde position,
d) un montage (14—17), qui commande le commutateur (18) et sert à identifier des impulsions isolées et commute le commutateur (18) de la première position dans la seconde position, lors du dépassement d'une valeur limite (ΔA) par la différence entre le signal d'entrée et le signal de sortie du circuit supplémentaire de post-intégration (13), et
e) un circuit série, monté entre la sortie du circuit supplémentaire de post-intégration (13) et l'entrée de commande de l'interrupteur (12) et constitué par un circuit à seuil vidéo (19) et un circuit logique de commande (20), auquel le signal de sortie du discriminateur (10) des durées d'impulsions est également envoyé.

2. Appareil radar Doppler à impulsions suivant la revendication 1, caractérisé par le fait que le circuit logique de commande est constitué par une porte NON-ET (23), dont les entrées sont reliées à la sortie du discriminateur (10) des durées d'impulsions et, par l'intermédiaire d'un inverseur (2), à la sortie du circuit à seuil vidéo (19).

## Claims

1. A pulse Doppler radar comprising:
— a circuit (7) for fixed target suppression;
— an analysis device (11); and
— an interposed signal channel consisting of a post-integration circuit (9) and a pulse-length discriminator (10) connected to the output thereof, characterised in that
— between the pulse length discriminator (10) and the analysis device (11) there is arranged a controllable switch (12) which cuts off the connection between the discriminator (10) and the analysis device (11);
— the signal channel and a control channel are each connected at their input via a receiving rectifier (8) to the output of the fixed target suppression circuit (7); and
— the control channel comprises the following devices:
a) a further post-integration circuit (13);
b) a change-over switch (18) via which the input of the further post-integration circuit (13) is connected to the receiving rectifier (8) in a first position of the change-over switch (18);
c) a feedback path (15, 21) via which, in a second position of the change-over switch (18), the output of the further post-integration circuit (13) is connected to the input of the further post-integration circuit (13) in order to preset a reference value (ΔA'');
d) a circuit arrangement (14—17) for individual pulse recognition which controls the change-over switch (18), and which brings the change-over switch (18) from the first position into the second position when a limit value (ΔA) is exceeded by the difference between the input signal and the output signal of the further post-integration circuit (13); and
e) a series arrangement, located between the output of the further post-integration circuit (13) and the control input of the switch (12), consisting of a video-threshold (19) and a control logic unit (20) which is also supplied with the output signal of the pulse length discriminator (10).

2. A pulse Doppler radar device as claimed in Claim 1, characterised in that the control logic unit consists of a NAND-gate (23) whose inputs are connected to the output of the pulse-length discriminator (10) and are connected via an inverter (2) to the output of the video-threshold (19).

# FIG 1

# FIG 2

# FIG 3

# FIG 4